# EUROPEAN PATENT APPLICATION

(11) **EP 1 160 481 A1**
(43) Date of publication of application: **05.12.2001**
(21) Application number: 01113394.9
(22) Date of filing: 01.06.2001
(51) Int. Cl.: F16D 69/02

(54) **Process for producing friction material and friction material obtained by the process**

(30) Priority: 02.06.2000 JP 2000166300; 22.05.2001 JP 2001152434
(71) Applicant: NISSHINBO INDUSTRIES INC., Chuo-ku, Tokyo (JP)
(72) Inventor: Yamane, Takeshi, c/o Tatebayashi Plant, Oura-gun, Gunma (JP)
(74) Representative: Laufhütte, Dieter, Dr.-Ing.

(57) **Abstract**

The present invention relates to a friction material and, in particular, provides a process for producing a friction material used in, for example, brakes of trucks, cars or the like and also provides a friction material obtained by the process. The process for producing a friction material containing a fiber component, a binder component and a filler component from raw materials of a friction material through at least a mixing step, a molding step and a heat-treating step, wherein the mixing of the raw materials in the mixing step is carried out by stirring and mixing the raw materials under heating in a dry system at a temperature where the binder is softened.

## Description

### BACKGROUND OF THE INVENTION

### Field of the Invention

The present invention relates to a process for producing a friction material, and, particularly to a process for producing a friction material used in, for example, brakes of trucks, cars or the like and to a friction material obtained by this process.

### Description of the Related Art

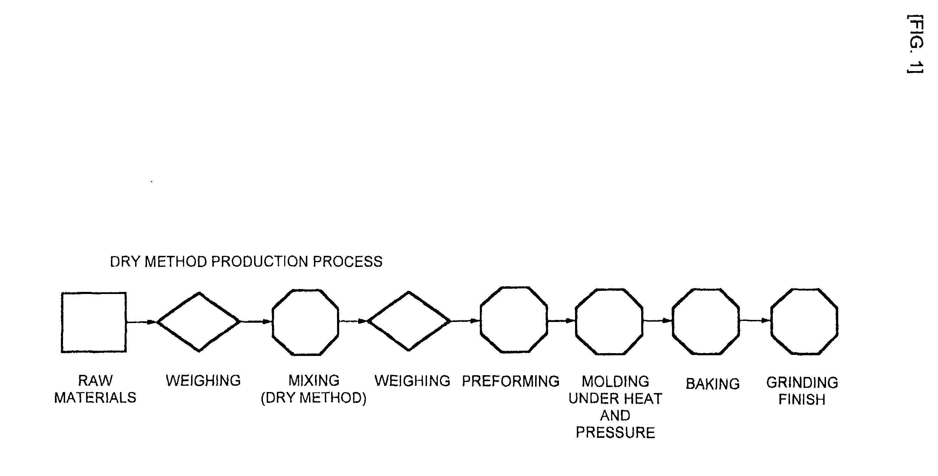

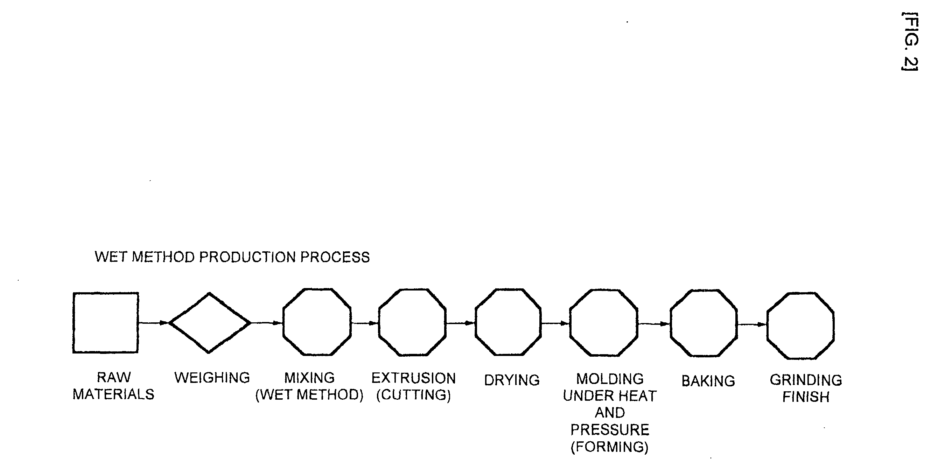

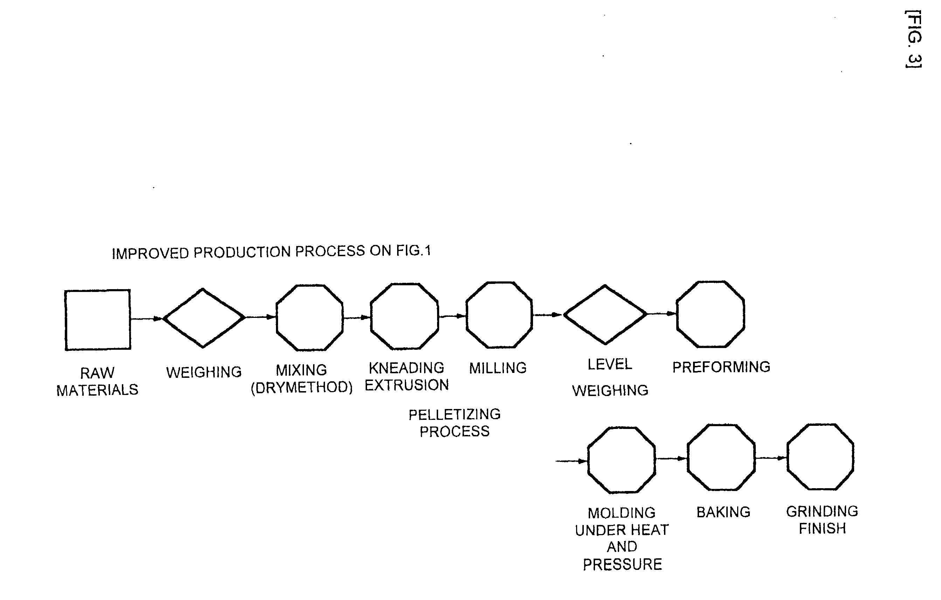

Conventionally, a friction material for brakes of vehicles is usually obtained by binding 5 to 20 ingredients of raw material by using a thermosetting resin. An example of the process will be shown below.
1. Raw materials are compounded in the ratios to be specified and the compounded raw materials are mixed using a known mixer, such as a Henschel mixer, Leodige mixer, Eirich mixer, Banbury mixer, kneader or V-type blender, which has a blade rotating at high speed while opening fibrous materials to obtain a mixture.
2. The sufficiently blended mixture is molded under heating and pressure.
3. Thereafter, the molded product is after-cured depending on the requirement to obtain a friction material.
4. Further, depending on the requirement, only the surface of the friction material is heat-treated at high temperatures, a groove is formed on the friction material or the so-called chamfering is carried out to obtain a final product (refer to a typical process diagram of FIG. 1).

In the above process, the raw materials of the friction material are mixed by a dry mixing method. However, if the mixture of the raw materials of the friction material obtained in this method is used to form a friction material, the adhesion of a thermosetting resin, usually a phenol resin which is a binder for the friction material, with other raw materials is poor, giving rise to the problem that cracks and wrinkles of the friction material is caused by stress produced during molding, specifically, a reaction against pressure during molding, stress due to the gas generated when the resin is cured and stress applied to the friction material when the product is used with the result that the friction material is decreased in strength and sometimes fallen away from a back plate.

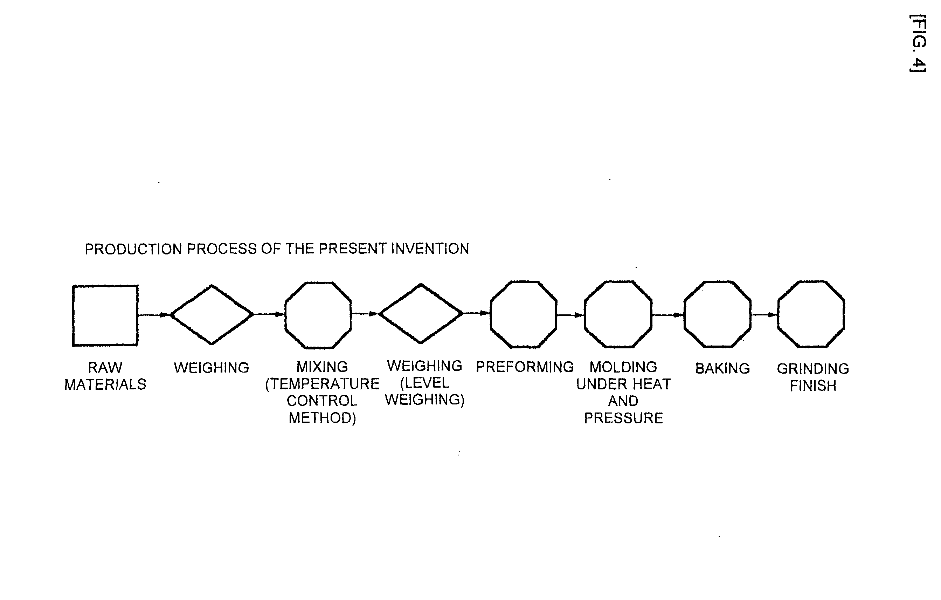

For this, a wet mixing method has been developed in which a solvent or water is used when raw materials are mixed, to dissolve and mix a thermosetting resin thereby making the thermosetting resin adhere to a fiber or filler (powder) contained in the raw materials of the friction material (refer to a typical process diagram of FIG. 2). For example, a friction material using a phenol alalkyl resin mainly as the binder and obtained by the wet mixing method is disclosed in Japanese Patent Application Laid-Open (JP-A) No. 9-194602.

However, since the wet mixing method including the example disclosed in the above publication uses a solvent or water, it is necessary to remove these liquids by heating under reduced pressure after they are mixed. If the raw materials are molded (pressed) without removing these liquids, a large quantity of the liquid is vaporized during molding, giving rise to the problem of the swelling and cracks of the product.

On the other hand, recognizing the problem in the above wet mixing method, the conventional dry mixing method is improved for the purpose of applying it only to a process for the production of a friction plate to improve the conventional dry mixing method which has been disclosed in the publication of Japanese Patent Publication (JP-B) No. 7-116303. In the technologies disclosed in the publication, fluidity is imparted to a mixture (complete powder) obtained when raw materials of a friction material are mixed in a dry system to enable uniform charge of the raw materials into a metallic mold with a narrow width. To state in more detail, using a resol type powdery phenol resin as a thermosetting resin binder, the raw materials are granulated and crushed while the reactivity of the resin binder is substantially kept and the obtained granular raw materials are level weighed and then preformed (refer to a typical process diagram of FIG. 3). However, this method disclosed as an example is eventually more increased in production steps than the conventional dry mixing method and therefore is undesirable in view of production cost.

### SUMMARY OF THE INVENTION

The present invention has been made to solve the problems which arise in the aforementioned process for producing the current friction material. It is an object of the present invention to provide a process for producing a friction material superior to those currently in use by improving the mixing step of a conventional production process using the dry mixing method without increasing the number of steps and also to provide the friction material obtained by the process.

A process for producing a friction material according to the present invention which is made for the purpose of solving the aforementioned problem has a structure comprising producing a friction material containing a fiber component, a binder component and a filler component from raw materials of a friction material through at least a mixing step, a molding step and a heat-treating step, wherein the mixing of the raw materials in the mixing step is carried cut by stirring and mixing the raw materials under heating in a dry system at a temperature where the binder is softened.

A friction material obtained by the aforementioned process according to the present invention has a structure comprising a fiber component, a binder component and a filler component wherein the raw materials are stirred and mixed under heating in a dry system at a temperature where the binder is softened.

In addition to the above structures, the present invention may adopt a structure in which, in the mixing step, the raw materials are heated to a temperature not higher than the temperature ranging from a temperature where a reaction for curing a thermosetting resin which is the binder component does not take place to a temperature where the reaction takes place only little and not lower than the softening temperature of the resin and mixed under pressure as required. The present invention may also adopt a structure in which a phenol resin having a curing reaction-initiating temperature of 130°C or more and a softening temperature of 80 to 120°C is used as the thermosetting resin.

Specifically, the inventor of the present invention has conducted earnest studies and, as a result, succeeded in enabling the thermosetting resin to adhere to a fiber or a filler (powder) firmly by heating with stirring and mixing at an appropriate temperature and by applying pressure as required without using any solvent and water when the raw materials of a friction material are mixed to complete the present invention.

### BRIEF DESCRIPTION OF THE DRAWINGS

FIG. 1 is a typical process diagram of a process for producing a friction material according a dry mixing method.
FIG. 2 is a typical process diagram of a process for producing a friction material according a wet mixing method.
FIG. 3 is a typical process diagram of a process for producing a friction material in a method obtained by improving the dry mixing method shown in FIG. 1.
Fig. 4 is a typical process diagram of a process for producing a friction material according a dry mixing method of the present invention.

### PREFERRED EMBODIMENTS OF THE INVENTION

An embodiment of the present invention will be hereinafter explained in detail. FIG. 1 is a typical process diagram of a process for producing a friction material according a dry mixing method, FIG. 2 is a typical process diagram of a process for producing a friction material according a wet mixing method, FIG. 3 is a typical process diagram of a process for producing a friction material in a method obtained by improving the dry mixing method shown in FIG. 1 and Fig. 4 is a typical process diagram of a process for producing a friction material according a dry mixing method of the present invention.

The present invention is a process improved in the mixing step shown in the process diagram according to the conventional dry mixing method shown in the above FIG. 1. To state in short, the process for the production of a friction material according to the present invention comprises compounding raw materials of a friction material in the ratios to be specified and mixing the compounded raw materials by using a mixer having a blade rotating at a high speed with fibrous materials being opened in the mixing step. The sufficiently blended mixture is molded by heating under pressure and thereafter subjected to after-curing depending on the requirement to obtain the friction material of the present invention containing a fiber component, a binder component and a filler component.

In the present invention, the raw materials (or a mixture obtained by mixing the compounded materials by using a mixer having a blade rotating at a high speed with fibrous materials being opened) are heated to a temperature not higher than the temperature ranging from a temperature where a reaction for curing a thermosetting resin which is the binder component does not take place to a temperature where the reaction takes place only little and not lower than the softening temperature of the thermosetting resin and mixed under pressure as required. As the mixing method, the following method may be adopted: the raw materials are premixed by the usual dry mixing method and thereafter mixed under heating (under pressure).

As to specific mixing temperature, though it depends on the type of thermosetting resin to be used, generally, the upper temperature limit is 130°C in the case of a phenol resin because a hexamine as a hardener starts suddenly to cure at a temperature of 130°C or more. The lower temperature limit is the softening temperature of the thermosetting resin to be used. For example, in the case of a usual straight phenol resin, the mixing temperature is about 80°C to 120°C. If the heat-cured product of a phenol resin has a softening temperature of 120°C or more, such a phenol resin is not included within the scope of the present invention.

Accordingly, a novolac type phenol resin which is cured by a hexamine is preferably used as the binder component of the friction material of the present invention. Each of other types of phenol resin and thermosetting resins other than a phenol resin may be used as far as it can be maintained at a temperature not higher than the temperature ranging from a temperature where a reaction for curing the resin does not take place to a temperature where the reaction takes place only little and it can be softened by heating in the mixing step.

Next, as the fiber component of the friction material of the present invention, an aramid fiber, carbon fiber, potassium titanate fiber, metallic fiber, rock wool, ceramic fiber or the like may be used.

Also, as the filler component of the friction material of the present invention, barium sulfate, calcium hydroxide, mica, calcium carbonate, potassium titanate, dust, crushed tire powder, vermiculite or the like may be used.

According to the present invention as aforementioned, a phenol resin forming a matrix is stuck fast to other fiber component and filler component to thereby improve the wettability, producing such an effect that the amount of the resin used for molding can be more decreased than in the case of using a current method. Incidentally, the amount of the resin is desirably small because the resin impairs brake performances such as fade. However, if the amount of the resin is decreased in the current method, the strength is decreased thereby impairing the anti-wear performance and the anti-crack performance and therefore such a reduction in the amount of the resin is undesirable.

Also, the friction material obtained in the process of the present invention has the effects of decreasing wear and preventing cracks of the friction material which cracks are generated by pressure and heat applied in a braking operation.

### EXAMPLES

Next, with regard to each of Examples 1 to 5 and Comparative Examples 1 and 2, the raw material components and compounding ratios shown in Table 1 were used to mix the components to obtain a friction material, which was then subjected to a test. The results of the test of each example are shown in Table 1. Incidentally, the arrow facing left "←" in Table 1 shows that the value in the column is the same as that in the left column.

### [Table 1]

A straight novolac phenol resin was used in Examples 1 to 4 and Comparative Examples 1 and 2 and a homemade NBR modified straight novolac phenol resin was used in Example 5. Also, as to the mixing method, each raw material was weighed, mixed using Eirich for 5 minutes and then kneaded in a kneader under heating at 110°C for 5 minutes in Examples 1 to 5. In Comparative Examples 1 and 2, each raw material was weighed and mixed in Eirich for 5 minutes.

In Table 1, the cracks were evaluated by the heat deterioration cracking test using a dynamo tester. In the test, the presence of cracks was evaluated after performing two cycles of a braking operation in which a brake is applied once every 50°C increment from 50°C to 600°C. The criteria of evaluation are as follows:
○ : No crack is observed, Δ: Cracks are observed but are small (10 mm or less), ×: Cracks are observed (10 to 30 mm) and ××: Large cracks are observed (30 mm or more).

The wear shown Table 1 was evaluated in a wear test using a dynamo tester. In the test, the wear when a brake is applied 1000 times at each of temperatures 100°C, 200°C, 300°C and 400°C was examined. The criteria of evaluation are as follows:
○ : 1.5 mm or less, Δ: 1.5 to 2.5 mm and ×: 2.5 mm or more.

It is found from the above Table 1 that the friction material formed by the mixing method according to the present invention has higher crack characteristics and wear properties than that formed by conventional mixing methods. To explain in detail, although the friction material of Example 4 and the friction material represented by Comparative Example 2 obtained by the conventional dry mixing method have the same percentage compositions of raw material, it is found that there is a large difference in the performance between the both due to the difference in mixing method. The amount of the phenol resin contained in the friction material of Example 5 is greater than that of the friction material of Comparative Example 2. This shows that a friction material having a superior performance can be obtained according to the present invention, even if the phenol resin is used in an amount equal to or greater than in the case of the conventional dry mixing method. Also, comparing the friction materials of Examples 2 and 3 with the friction material of Comparative Example 1 produced by a wet mixing method shows that even if the proportion of the phenol resin is smaller (Example 2) or the same (Example 3), more excellent characteristics are obtained in the case of the friction materials of Examples than in the case of the friction material (Comparative Example 1) obtained by the wet mixing method.

## Claims

1. A process for producing a friction material containing a fiber component, a binder component and a filler component from raw materials of a friction material through at least a mixing step, a molding step and a heat-treating step, wherein the mixing of said raw materials in said mixing step is carried out by stirring and mixing the raw materials under heating in a dry system at a temperature where said binder is softened.

2. A process for producing a friction material according to Claim 1, wherein, in the mixing step, the raw materials are heated to a temperature not higher than the temperature ranging from a temperature where a reaction for curing a thermosetting resin which is the binder component does not take place to a temperature where the reaction takes place only little and not lower than the softening temperature of the resin and mixed under pressure as required.

3. A process for producing a friction material according to Claim 1, wherein the thermosetting resin is a phenol resin having a curing reaction-initiating temperature of 130°C or more and a softening temperature of 80 to 120°C.

4. A process for producing a friction material according to Claim 2, wherein the thermosetting resin is a phenol resin having a curing reaction-initiating temperature of 130°C or more and a softening temperature of 80 to 120°C.

5. A friction material comprising a fiber component, a binder component and a filler component wherein raw materials for a friction material are stirred and mixed under heating in a dry system at a temperature where the binder is softened.

6. A friction material according to Claim 5, wherein a thermosetting resin which is the thermosetting resin is a phenol resin having a curing reaction-initiating temperature of 130°C or more and a softening temperature of 80 to 120°C.
